# EUROPEAN PATENT SPECIFICATION

(11) **EP 2 647 760 B1**
(45) Date of publication and mention of the grant of the patent: **27.12.2017**
(21) Application number: 12162798.8
(22) Date of filing: 02.04.2012
(51) Int. Cl.: D21H 23/50, B05B 1/00, B05B 7/00, B29C 45/27, B05B 1/24, B05B 7/16, B05B 9/00, B05B 11/00, B05B 15/00, B05B 15/02

(54) **Device for treating a fiber web**
Vorrichtung zur Behandlung eines Fasernetzes
Dispositif pour traiter un voile de fibres

(43) Date of publication of application: 09.10.2013
(73) Proprietor: Valmet Technologies, Inc., 02150 Espoo (FI)
(72) Inventor: Tynkkynen, Topi, FI-01520 Vantaa (FI); Pitkäniemi, Tapio, FI-04480 Haarajoki (FI); Multamäki, Jari, FI-45700 Kuusankoski (FI); Luoma, Jukka, FI-04310 Tuusula (FI)
(74) Representative: Berggren Oy, Helsinki & Oulu

(56) References cited:
- WO-A1-02/072953
- WO-A1-2005/040497
- DE-A1- 19 722 338

## Description

The invention relates to treating a fiber web. Especially the invention relates to a device for applying treatment substance for treating a moving fiber web on at least one surface of the fiber web according to the preamble of claim 1.

In WO publication 2005/040497 A1 is disclosed a device for treating a fiber web, especially a device for applying treatment substance for treating a moving fiber web on at least one surface of the fiber web, which device comprises at least one nozzle comprising a channel for the treatment substance and a tip or end of the nozzle for providing a treatment substance flow on the fiber web. The tip or end of the nozzle of the device for treating a fiber web is provided with means comprising insulation means and/or cooling means for managing the temperature of the tip or end of the nozzle. Corresponding types of devices are also enclosed in WO publication 02/072953 A1 and in DE publication 19722338 A1.

In WO publication 2006/058961 A1 is disclosed a method and arrangement for processing a paper or board web or similar fiber web. In this prior art method a processing mixture is spread on the surface of the web with spray nozzles. In the method the web to be processed is lead from a press nip and between rolls in this nip. Before the web enters the nip such an amount of processing mixture is spread onto at least one side of the web that the processing mixture is still wet when it enters the nip. In the prior art arrangement according to this publication the arrangement comprises at least one press nip, elements for taking the web to the press nip an elements for spreading the processing mixture and the element for spreading the processing mixture are spray nozzles which are arranged at an adjustable distance in the arrival direction of the web from the press nip to feed the processing mixture to at least one surface of the web.

In WO publication 02/072953 is disclosed an assembly for treating a moving web of paper of board with web treatment substance which assembly comprises an application chamber located in at close vicinity of the moving web and facing the web, whereby the chamber is delineated by the web, the walls of the coater apparatus and sealing means and at least one linear nozzle array incorporating at least one nozzle for spraying the web treatment substance on the web and in which assembly also comprises a suction chamber adapted to communicate with the application chamber and means for removing mist and accumulations of the web treatment substance by way of establishing a flow in the suction chamber and the application chamber.

In FI utility model registration 9401 is disclosed a device for treating a fiber web, which comprises an application device, in particular a spraying device, for applying treatment substance on a moving fiber wed, which application device comprises an application chamber and a channel for removing mist of the treatment substance from the application chamber and flow openings for blowing steam and/or air.

In US patent 6866207 is disclosed an atomizer for paper making comprising elongated tubing, an intake orifice disposed on one end of said tubing, a nozzle assembly affixed to the opposite end of said tubing, a first nozzle element extending from said nozzle assembly at an angle with respect to the axis of said tubing, a swirl wheel and cone former concentrically disposed with respect to said tubing and adopted to receive propellant gas from said first nozzle element, and said cone former comprising a swirl ledge angled inwardly with respect to said axis of said tubing. This apparatus creates a continuous seamless spray of the desired liquid using the nozzle utilizing any single gas, steam, air or a mixture there of as a motive gas or propellant.

In US patent 6969012 is disclosed an atomizer for paper making comprising a housing, said housing having three inlets, three channels each including a nozzle in communication respectively with said inlets, said three inlets comprising a fluid-receiving first inlet, a fluid-receiving second inlet, a liquid-receiving third inlet, one of said channels being the innermost channel, said innermost channel being associated with said third inlet, the one of said nozzles associated with said innermost channel extending outwardly of said housing beyond the other two of said nozzles, and said innermost channel being uniform in diameter from said liquid-receiving third inlet to the outer end of said nozzle.

One problem that may occur in connection with nozzles for applying web heated treatment substance on the web in prior art devices for treating a fiber web is that some treatment substance may adhere at the tip or end of the nozzle due to the high temperature of the tip or end of the nozzle and thus disturb the flow of spray of the treatment substance causing uneven application result. In worse cases the adhered substance amount is high and it may form lumps at the tip or end of the nozzle which lumps might drop on the fiber web causing a break or adhesion of fiber web reel-layers in connection with reeling.

An object of the invention is to create a device for treating a fiber web relating to the adhering of the treatment substance on the tip or end of the nozzle is eliminated or at least minimized.

In order to achieve the above object the device according to the invention is mainly characterized by the features of the characterizing part of claim 1.

Other advantageous embodiments and features of the invention are presented in the dependent claims.

According to the invention the tip or end of the nozzle of the device for treating a fiber web is provided with means for managing the temperature of the tip or end of the nozzle for preventing the adhering of the heated treating substance. By the means for managing the temperature the temperature of the tip or end of the nozzle is kept at such range that adhering of the treatment substance does not occur, advantageously the temperature of the tip or end of the nozzle is kept at temperature range of 15 - 50 °C. The suitable temperature is dependent of the properties of the treatment substance. Typically treatment substance temperature range 50 - 100 °C is suitable for instance for sizing agents and temperature range 20 - 50 °C is suitable for instance for coating pastes. In accordance with advantageous embodiments of the invention the means are based on managing the temperature of the tip or end of the nozzle by insulation means and/or cooling means. The treatment substance is for example sizing agent or coating paste or starch or latex or polyvinyl acetate.

According to the invention the insulation means and/or cooling means are separately mountable such that in addition to new deliveries of the devices also already installed nozzles of the devices for treating a fiber web that have adherence problems can be provided with these means for managing the temperature of the tip or end of the nozzle for preventing the adhering of the heated treatment substance on the tip or end of the nozzle.

The invention is suitable for different types of nozzles used in connection with devices for treating a fiber web, for example in connection with spray nozzles, high pressure nozzles, air atomizing nozzles, pressure atomizing nozzles, etc.

According to an advantageous feature of the invention the coefficient of thermal conductivity of the main material of the insulation means is 0, 10 - 0, 40 W/m*K, advantageously 0, 14 - 0, 38 W/m*K.

According to an advantageous feature of the invention the coefficient of thermal conductivity of the main material of the cooling means is 10 - 3000 W/m*K, advantageously 15 - 2600 W/m*k.

According to an advantageous feature of the invention the main material of the insulation means is polymer or laminate or a combination of these, advantageously PVC (polyvinylchloride) or neophren or PUR (polyurethane) or PVDF (polyvinyldene fluoride) or PP (polypropylene) or PTFE (polytetrafluoride ethylene) or PC (polycarbonate) or POM (polyacetylene) or PE (polyethene) or a combination of two or more of these.

According to an advantageous feature of the invention the main material of the cooling means is aluminum or copper or diamond or stainless steel or combination of two or more of these.

According to an advantageous feature of the invention the insulation means are of one or more insulation parts which can be of same or different insulation material.

In the following the invention is described in more detail referring to the accompanying drawing in which
in figures 1 - 3 are presented schematical examples of advantageous examples of the invention in which the temperature of the tip or end of the nozzle is managed by insulation means and
in figures 4 - 7 are presented schematical examples of advantageous examples of the invention in which the temperature of the tip or end of the nozzle is lowered by cooling means.

In the figures and in the following description corresponding parts and part assemblies etc. are referred by same reference signs. It should be noted that the invention is not limited to these examples of the figures but many modifications and alterations are possible.

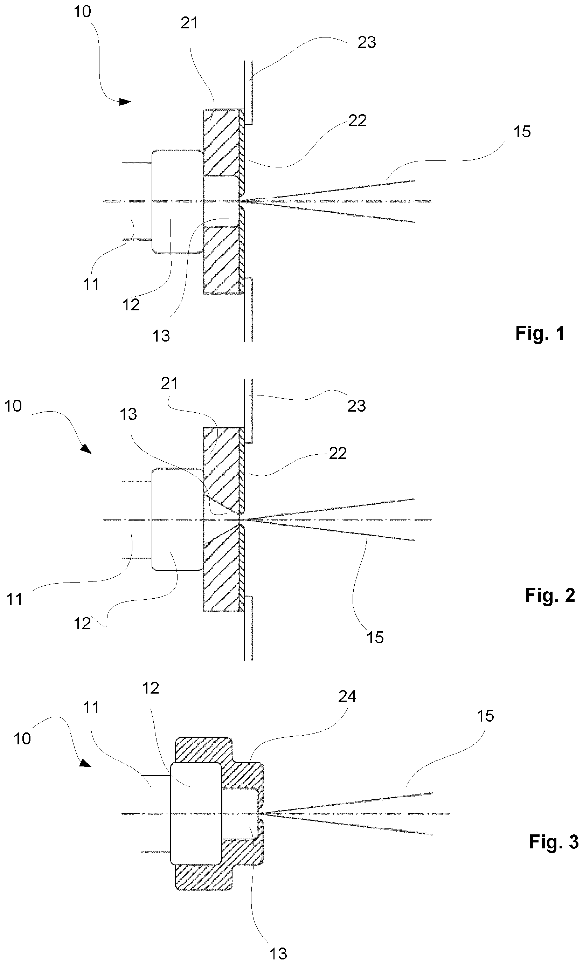

In the examples of figures 1 - 3 the temperature of the tip or end 13 of the nozzle 10 is managed by insulation means 21, 22, 24. In figures 1 - 2 the nozzle 10 of a device for treating a fiber web comprises a channel 11 for feeding the treatment substance to the tip or end 13 of the nozzle 10. The channel 10 is connected to the tip or end 13 by a connecting part 12. The channel 10, connecting part 11 and the tip or end 13 are concentric. The heated treatment substance is applied through the tip or end 13 of the nozzle as treatment substance flow 15 in these examples as pressurized spray 15. According to the invention the temperature of the tip or end 13 of the nozzle 10 is managed by insulation means 21, 22, 24 that are placed around the tip or end 13 of the nozzle 10.

In the example of figure 1 the tip or end 13 of the nozzle 10 is of cylindrical shape and its insulation means 21, 22 are designed of two insulation parts 21, 22. Around outer cylindrical surface of the tip or end 13 is placed cylindrical insulation part 21 and the end surface of the nozzle tip or end 13 and of the insulation part 21 are covered by another insulation part 22. The insulation means 21, 22 are supported by support plate 23 and by the shoulder part formed by the end surface of the connecting part 12

In the example of figure 2 the tip or end 13 of the nozzle 10 is of conical shape and around its outer conical surface is placed insulation part 21 having conical shape of its facing surface matching the shape of the outer surface of the tip or end 13 of the nozzle 10 and the end surface of the nozzle tip or end 13 and of the insulation part 21 are covered by another insulation part 22. The insulation means 21, 22 are supported by support plate 23.

In the example of figure 3 the tip or end 13 of the nozzle 10 is corresponding to the same of the example of figure 1 but in this example the insulation means 24 formed of a single insulation part 24 having on the facing side shape that corresponds to the outer cylindrical and end surfaces of the tip or end 13 of the nozzle 10. In this example the insulation means also extends at least partly over the outer surface of the connecting part 12 of the nozzle 10. The insulation means 24 according to this example can also be used in connection with nozzles 10 according to the example of figure 2 but naturally formed correspondingly with matching conical shape of the facing side.

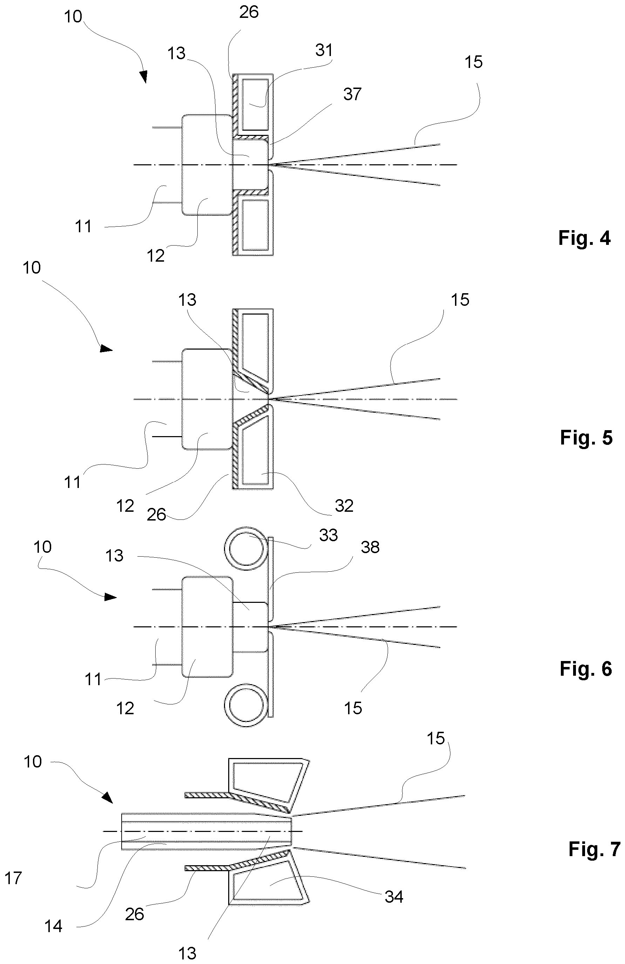

In the examples of figures 4 - 7 the temperature of the tip or end 13 of the nozzle 10 is managed by cooling means 31, 32, 33, 34 and the examples of figures 4, 5 and 7 are also provided with insulation means 26. The nozzles 10 of the examples of figures 4 and 6 correspond to the nozzles 10 of figures 1 and 3. The nozzle 10 in the example of figure 5 corresponds to the nozzle 10 of the example figure 2. The nozzle 10 in the example of figure 7 is a tubular nozzle 10 having a tubular channel 17 with wall 14 and extends first as a cylindrical and then ends as conical tip or end 13 of the nozzle. In the examples the cooling means 31 - 34 are formed as a cooling channel in which a cooling medium flows.

In the examples of figures 4 and 5 the cooling channel 31, 32 is formed around the tip or end 13 of the nozzle 10 and insulation means 26 are placed in between the outer surface of the tip or end 13 and the facing side of the cooling channel 31, 33.

In the example of figure 6 the cooling channel 33 is spaced apart from the tip or end 13 of the nozzle 10 and thus only air functions as insulation means.

In the example of figure 7 spaced apart from end part of the nozzle 10 and the tip or end 13 of the nozzle an insulation means 26 is located and around the insulation means 26 cooling means 34 as cooling channel is located. The cooling channel 34 extend at least over the tip or end 13 of the nozzle 10 but can extend also to greater length.

## Claims

1. Device for treating a fiber web, especially a device for applying treatment substance for treating a moving fiber web on at least one surface of the fiber web, which device comprises at least one nozzle (10) comprising a channel (11; 17) for the treatment substance and a tip or end (13) of the nozzle (10) for providing a treatment substance flow (15) on the fiber web, in which device the tip or end of the nozzle (10) of the device for treating a fiber web is provided with means (21, 22; 24; 26; 31, 32, 33, 34) comprising insulation means (21, 22; 24; 26) and/or cooling means (31, 32, 33, 34) for managing the temperature of the tip or end (13) of the nozzle (10) for preventing the adhering of the heated treating substance, **characterized in, that** the insulation means and/or cooling means (21, 22; 24; 26; 31, 32, 33, 34) are separately mountable on tip or end (13) of the nozzle (10).

2. Device according to claim1, **characterized in, that** the nozzle (10) is a spray nozzle, a high pressure nozzle, an air atomizing nozzle or pressure atomizing nozzle.

3. Device according to claim1 or 2, **characterized in, that** the coefficient of thermal conductivity of the material of the insulation means (21, 22; 24; 26) is 0, 10 - 0, 40 W/m*K, advantageously 0, 14 - 0, 38 W/m*K by which the temperature of the tip or end (13) of the nozzle (10) is kept at temperature range of 15 - 50°C.

4. Device according to any of claims 1 - 3, **characterized in, that** the coefficient of thermal conductivity of the material of the cooling means (31, 32, 33, 34) is 10 - 3000 W/m*K, advantageously 15 - 2600 W/m*k by which the temperature of the tip or end (13) of the nozzle (10) is kept at temperature range of 15 - 50 °C.

5. Device according to any of claims 1 - 4, **characterized in, that** the material of the insulation means (21, 22; 24; 26) is polymer or laminate or a combination of these, advantageously PVC (polyvinylchloride) or neophren or PUR (polyurethane) or PVDF (polyvinyldene fluoride) or PP (polypropylene) or PTFE (polytetrafluoride ethylene) or PC (polycarbonate) or POM (polyacetylene) or PE (polyethene) or a combination of two or more of these by which the temperature of the tip or end (13) of the nozzle (10) is kept at temperature range of 15 - 50 °C.

6. Device according to any of claims 1 - 5, **characterized in, that** the material of the cooling means (31, 32, 33, 34) is aluminum or copper or diamond or stainless steel or combination of two or more of these by which the temperature of the tip or end (13) of the nozzle (10) is kept at temperature range of 15 - 50 °C.

7. Device according to any of claims 1 - 6, **characterized in, that** the heated treatment substance is for example sizing agent or coating paste or starch or latex or polyvinyl acetate.

## Patentansprüche

1. Vorrichtung zur Behandlung einer Faserbahn, insbesondere Vorrichtung zum Aufbringen einer Behandlungssubstanz zum Behandeln einer sich bewegenden Faserbahn auf wenigstens eine Fläche der Faserbahn, wobei die Vorrichtung wenigstens eine Düse (10) aufweist, die einen Kanal (11; 17) für die Behandlungssubstanz und eine Spitze oder ein Ende (13) der Düse (10) zum Erzeugen eines Behandlungssubstanzstroms (15) auf die Faserbahn aufweist, wobei in der Vorrichtung die Spitze oder das Ende der Düse (10) der Vorrichtung zum Behandeln einer Faserbahn mit einer Einrichtung (21, 22; 24; 26; 31, 32, 33, 34) versehen ist, die eine Isoliereinrichtung (21, 22; 24; 26) und/oder eine Kühleinrichtung (31, 32, 33, 34) zum Regeln der Temperatur der Spitze oder des Endes (13) der Düse (10) aufweist, um das Anhaften der erwärmten Behandlungssubstanz zu verhindern,
**dadurch gekennzeichnet, dass**
die Isoliereinrichtung und/oder die Kühleinrichtung (21, 22; 24; 26; 31, 32, 33, 34) einzeln auf der Spitze oder dem Ende (13) der Düse (10) montierbar ist.

2. Vorrichtung nach Anspruch 1,
**dadurch gekennzeichnet, dass**
die Düse (10) als eine Sprühdüse, eine Hochdruckdüse, eine Luftzerstäuberdüse oder eine Druckzerstäuberdüse ausgebildet ist.

3. Vorrichtung nach Anspruch 1 oder 2,
**dadurch gekennzeichnet, dass**
die Wärmeleitzahl des Materials der Isoliereinrichtung (21, 22; 24; 26) 0,10 - 0,40 W/m*K, vorzugsweise 0,14 - 0,38 W/m*K, beträgt, wodurch die Temperatur der Spitze oder des Endes (13) der Düse (10) in einem Temperaturbereich von 15 - 50 °C gehalten wird.

4. Vorrichtung nach einem der Ansprüche 1 - 3,
**dadurch gekennzeichnet, dass**
die Wärmeleitzahl des Materials der Kühleinrichtung (31, 32, 33, 34) 10 - 3000 W/m*K, vorzugsweise 15 - 2600 W/m*K, beträgt, wodurch die Temperatur der Spitze oder des Endes (13) der Düse (10) in einem Temperaturbereich von 15 - 50 °C gehalten wird.

5. Vorrichtung nach einem der Ansprüche 1 - 4,
**dadurch gekennzeichnet, dass**
das Material der Isoliereinrichtung (21, 22; 24; 26) ein Polymer oder ein Laminat oder eine Kombination davon, vorzugsweise PVC (Polyvinylchlorid) oder Neopren oder PUR (Polyurethan) oder PVDF (Polyvinylidenfluorid) oder PP (Polypropylen) oder PTFE (Polytetrafluorethylen) oder PC (Polycarbonat) oder POM (Polyacetylen) oder PE (Polyethylen) oder eine Kombination von zwei oder mehr derselben ist, wodurch die Temperatur der Spitze oder des Endes (13) der Düse (10) in einem Temperaturbereich von 15 - 50 °C gehalten wird.

6. Vorrichtung nach einem der Ansprüche 1 - 5,
**dadurch gekennzeichnet, dass**
das Material der Kühleinrichtung (31, 32, 33, 34) Aluminium oder Kupfer oder Diamant oder rostfreier Stahl oder eine Kombination von zwei oder mehr derselben ist, wodurch die Temperatur der Spitze oder des Endes (13) der Düse (10) in einem Temperaturbereich von 15 - 50 °C gehalten wird.

7. Vorrichtung nach einem der Ansprüche 1 - 6,
**dadurch gekennzeichnet, dass**
die erwärmte Behandlungssubstanz zum Beispiel Leimmittel oder Beschichtungspaste oder Stärke oder Latex oder Polyvinylacetat ist.

## Revendications

1. Dispositif de traitement d'un voile de fibres, en particulier dispositif d'application d'une substance de traitement d'un voile de fibres mobile sur au moins une surface du voile de fibres, lequel dispositif comprend au moins une buse (10) comprenant un canal (11; 17) pour la substance de traitement et une pointe ou extrémité (13) de la buse (10) pour délivrer un flux de substance de traitement (15) sur le voile de fibres, dans lequel dispositif la pointe ou extrémité de la buse (10) du dispositif de traitement d'un voile de fibres est pourvue de moyens (21, 22; 24; 26; 31, 32, 33, 34) comprenant des moyens d'isolation (21, 22; 24; 26) et/ou des moyens de refroidissement (31, 32, 33, 34) pour contrôler la température de la pointe ou extrémité (13) de la buse (10) pour empêcher l'adhérence de la substance de traitement chauffée, **caractérisé en ce que** les moyens d'isolation et/ou les moyens de refroidissement (21, 22; 24; 26; 31, 32, 33, 34) peuvent être montés séparément sur la pointe ou extrémité (13) de la buse (10).

2. Dispositif selon la revendication 1, **caractérisé en ce que** la buse (10) est une buse de pulvérisation, une buse à haute pression, une buse d'atomisation d'air ou une buse d'atomisation de pression.

3. Dispositif selon la revendication 1 ou 2, **caractérisé en ce que** le coefficient de conductivité thermique du matériau des moyens d'isolation (21, 22; 24; 26) est de 0,10 à 0,40 W/m*K, avantageusement de 0,14 à 0,38 W/m*K, ce qui a pour effet que la température de la pointe ou extrémité (13) de la buse (10) est maintenue dans une plage de température de 15 à 50 °C.

4. Dispositif selon l'une quelconque des revendications 1 à 3, **caractérisé en ce que** le coefficient de conductivité thermique du matériau du moyen de refroidissement (31, 32, 33, 34) est de 10 à 3000 W/m*K, avantageusement de 15 à 2600 W/m*k, ce qui a pour effet que la température de la pointe ou extrémité (13) de la buse (10) est maintenue dans une plage de température de 15 à 50 °C.

5. Dispositif selon l'une quelconque des revendications 1 à 4, **caractérisé en ce que** le matériau du moyen d'isolation (21, 22; 24; 26) est un polymère ou laminé ou une combinaison de ceux-ci, avantageusement du PVC (chlorure de polyvinyle ou néoprène ou PUR (polyuréthane) ou PVDF (fluorure de polyvinyldène) ou PP (polypropylène) ou PTFE (polytétrafluorure éthylène) ou PC (polycarbonate) ou POM (polyacétylène) ou PE (polyéthylène) ou une combinaison de deux ou plus de ceux-ci, ce qui a pour effet que la température de la pointe ou extrémité (13) de la buse (10) est maintenue dans une plage de température de 15 à 50 °C.

6. Dispositif selon l'une quelconque des revendications 1 à 5, **caractérisé en ce que** le matériau des moyens de refroidissement (31, 32, 33, 34) est de l'aluminium ou du cuivre ou du diamant ou de l'acier inoxydable ou une combinaison de deux ou plus de ceux-ci, ce qui a pour effet que la température de la pointe ou extrémité (13) de la buse (10) est maintenue dans une plage de température de 15 à 50 °C.

7. Dispositif selon l'une quelconque des revendications 1 à 6, **caractérisé en ce que** la substance de traitement chauffée est par exemple de l'agent de collage ou de la pâte de revêtement ou de l'amidon ou du latex ou de l'acétate de polyvinyle.
